(19)

Europäisches
Patentamt

European
Patent Office

Office européen
des brevets

(11) **EP 2 098 892 A1**

(12) **EUROPÄISCHE PATENTANMELDUNG**

(43) Veröffentlichungstag:
**09.09.2009  Patentblatt 2009/37**

(51) Int Cl.:
*G02B 5/00* (2006.01)        *G02B 21/00* (2006.01)

(21) Anmeldenummer: **09008144.9**

(22) Anmeldetag: **29.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.05.2005  DE 102005020542**

(62) Dokumentnummer(n) der früheren Anmeldung(en) nach Art. 76 EPÜ:
**06753460.2 / 1 877 842**

(71) Anmelder: **Carl-Zeiss Jena GmbH
07745 Jena (DE)**

(72) Erfinder:
 • **Klose, Heinrich
   07745 Jena (DE)**

 • **Bartzke, Karl-Heinz
   07749 Jena (DE)**
 • **Wolleschensky, Ralf
   07743 Jena (DE)**
 • **Burkhardt, Matthias
   07768 Eichenberg (DE)**
 • **Heise, Jürgen
   07745 Jena (DE)**

Bemerkungen:
Diese Anmeldung ist am 22-06-2009 als Teilanmeldung zu der unter INID-Code 62 erwähnten Anmeldung eingereicht worden.

(54)    **Einrichtung und Verfahren zur reproduzierbaren Einstellung der Pinholeöffnung und Pinholelage in Laserscanmikroskopen**

(57)    Vorrichtung zur Einstellung der Lage und/oder Größe eines Pinholes in einem Laser Scanning Mikroskop( LSM),

wobei über eine separate Lichtquelle oder den LSM - Laser eine Beleuchtung des Pinholes erfolgt und eine Verschiebung des Pinholes quer zur optischen Achse erfolgt, bis ein Intensitätsmaximum auf einem Empfänger vorliegt und eine Erfassung der Pinholelage erfolgt und diese gemeinsam mit zu auswechselbaren optischen Komponenten gehörigen Daten abgespeichert wird.

**Bild 11:**   Laserscanmikroskop mit in den Strahlengang einschiebbarer Retrofolie zur Justierung des Pinholes in die Taille des Laserfokus

EP 2 098 892 A1

**Beschreibung**

Es wurde bereits ein Pinhole für die Laserscanmikroskopie vorgeschlagen, das die Einstellung der Pinholegröße ab 2μm und die Einstellung der Pinholelage mit einer Reproduzierbarkeit von 2μm gestatten soll. Damit soll eine Verbesserung der Pinholeeinstellwerte gegenüber derzeit üblicher LSM-Pinhole um den Faktor 5 erzielt werden.

Der Reproduzierbarkeitsfehler von 2μm wird durch den beschriebenen Schrittmotor-Spindelantrieb und das erfindungsgemäße Referenzierungsverfahren verursacht. Die Auflösung des Schrittmotorantriebes beträgt 0,3μm (Differenzgewinde mit 50μm Steigung und Schrittmotor im 1/8-Mikroschrittbetrieb).

Ein Pinhole von 2μm Größe kann dann sinnvoll genutzt werden, wenn sich die Pinholelage mit einer Reproduzierbarkeit von etwa 0,5μm einstellen lässt.

Weist die Einstellung der Pinholelage einen Reproduzierbarkeitsfehler von nur 2μm auf, kann das auf die kleine Pinholeöffnung treffende Licht erheblich vignettiert werden.

Der Erfindung liegt deshalb die Aufgabe zu Grunde, die Reproduzierbarkeit der Pinholelage erheblich, vorteilhaft auf unter 0,5μm, zu verbessern.

Um Reproduzierbarkeiten einer Linearbewegung von 0,5μm durch herkömmliche Spindelantriebe erzielen zu können, werden im allgemeinen hochauflösende Wegmeßsysteme benötigt, die aber zu teuer und deren Meßköpfe für eine Pinholeeinrichtung zu groß sind. Es ist deshalb eine Lösung gesucht, die es gestattet, ohne Meßsysteme eine auf 0,5μm reproduzierbare Einstellung der Pinholelage zu erzielen.

Die Erfindung besteht darin, signifikante Lagen der Pinholeöffnung durch virtuelle "xy-Zeiger" genau zu markieren.

Die Ermittlung der virtuellen Zeiger erfolgt vorteilhaft durch eine am Laserscanmikroskop anzubringende CCD-Kamera. Der virtuelle Zeiger, bezogen auf ein Koordinatensystem, das beispielsweise einen Nullpunkt für eine X- und Y-Achse an einer Ecke des CCD Chips aufweist, wird in einem elektronischen Speicher abgelegt und dient dazu, jede markierte Pinholelage jederzeit und beliebig oft mit einer Reproduzierbarkeit von 0,5μm wiederzufinden. Hierzu werden die Schrittmotorantriebe, die eine Auflösung von 0,3μm aufweisen, in einem Regelkreis betrieben, der die von der CCD-Kamera ermittelte aktuelle Lage der Pinholeöffnung mit dem virtuellen Zeiger vergleicht und Abweichungen korrigiert.

Die vorgeschlagene Lösung besteht weiterhin darin, die Pinholeöffnung optisch vergrößert auf einen hochauflösenden Chip einer CCD-Kamera abzubilden, die Lage und Größe der Pinholeöffnung durch Bildauswertung zu ermitteln, die aktuellen Werte mit der abgespeicherten Ursprungslage und Ursprungsgröße des Pinholes zu vergleichen und Abweichungen durch eine hochauflösende Schrittmotorsteuerung bis auf eine Restabweichung von 0,5μm zu korrigieren.

Eine weitere Lösung besteht darin, analog zu dem auf das Pinhole fokussiertem Laserstrahl einen oder mehrere Lichtzeiger zu erzeugen und vom Pinhole unter Nutzung der Schrittmotorantriebe und des Photomulitpliers oder einem Lichtempfänger einzufangen. Dann befindet sich die Pinholeöffnung an der Stelle maximaler Lichtintensität des Lichtzeigers und damit auch des Laserfokus.

Da der Photomultiplier oder Lichtempfänger ein Flächendetektor ohne Ortsauflösung ist, muß bei dieser Lösung auf die Ermittlung und Steuerung der Größe der Pinhoieöffnung verzichtet werden. Das bewirkt aber keinen entscheidenden Nachteil, weil die reproduzierbare Einstellung kleiner Pinholeöffnungen von 2μm bis 50μm Größe durch ein Referenzierungsverfahren (Referenzierung erfolgt dann, wenn sich das Pinhole gerade öffnet und Licht auf den Photomultiplier fällt) und die reproduzierbare Einstellung großer Pinholeöffnungen von 50μm bis 1000μm durch einen hochauflösenden Schrittmotorantrieb gesichert sind.

Ein wesentlicher Vorteil der Lösungen mit zusätzlicher Lichtquelle besteht darin, dass die Probe P während der Pinholejustage keiner Lichtbelastung ausgesetzt werden braucht, da der Laser L abgeschaltet werden kann.

**1. Erfindungsgemäße Einrichtung und erfindungsgemäßes Verfahren**

**1.1 optische Anordnung (Bilder 1, 2 und 3)**

Für den Markierungsvorgang wird das Pinhole mit einer zehnfach vergrößernden Optik VO auf die ca. 10x10mm$^2$ großen Fläche des CCD-Chips abgebildet. Ein PC oder μ-Controller berechnet den optischen Schwerpunkt der Pinholeöffnung auf der CCD-Empfängerfläche, dessen xy-Koordinaten als virtueller Pfeil abgespeichert werden.

Als Nullpunkt des X/Y-Koordinatensystems dient beispielsweise die linke untere Ecke der CCD Fläche. Für den Markierungsvorgang ist eine geeignete Ausleuchtung der Pinholeöffnung zu realisieren. Vorteilhaft erfolgt eine Beleuchtung über eine Weißlicht LED, die aus drei farbigen Dioden (rot, grün, blau) besteht, so dass eine Beleuchtung unabhängig von der Art des verwendeten dichrioitischen Spiegels gewährleistet ist. Vorteilhaft kann für den Markierungsvorgang auch eine IR-LED (900nm) eingesetzt werden. Die dichroitischen Spiegel und Filter sollten dann IR durchlässig ausgebildet sein. Alle im folgenden beschriebenen optischen Anordnungsbeispiele mit CCD Empfänger beeinflussen nicht den Laserscanvorgang und verursachen dabei keinen Verlust an dem von der Probe austretendem Licht.

Für jeden eingeschwenkten dichroitischen Teilerspiegel oder andere auswechselbare optische Komponenten wird einmalig die optimale Pinholelage erfasst und abgespeichert und beim Einschwenken des betreffenden Bauelementes während des normalen LSM Betriebes wieder hergestellt.

Die optimale Pinholelage wird jeweils durch Intensitätsmessung am PMT beim Markierungsvorgang ermittelt.

Vorderseitige Ausleuchtung der Pinholeöffnung durch eine LED (Bild 1)

Ein Laser Scanning Mikroskop ist schematisch durch einen eine Probe P beleuchtenden Beleuchtungslaser L, ein Objektiv O, eine Pinholeoptik PO, ein senkrecht zur optischen Achse verstellbares Pinhole PH, dem ein Photomultiplier PMT nachgeordnet ist, einen dichroitischen Spiegel SP zur Trennung von Anregungs- und Detektionsstrahlengang dargestellt. Ein Nebenfarbteiler ermöglicht die simultane Beleuchtung einer zweiten Wellenlänge des Fluoreszenzlichtes.

Eine in einem zusätzlichen optischen Arm des Laserscanmikroskopes angeordnete LED oder Halogenlampe beleuchtet über einen Kollimator KO und den dichroitischen Spiegel SP vorderseitig die Pinholeöffnung. Der Photomultiplier PMT wird vorteilhaft aus Platzgründen beim Markierungsvorgang aus dem Strahlengang des Laserscanmikroskopes ausgeschwenkt und hinter dem Pinhole PH eine Vergrößerungsoptik VO und eine CCD Fläche angeordnet. Beim Laserscanvorgang wird dann die LED abgeschaltet.

Rückseitige Ausleuchtung der Pinholeöffnung durch eine LED (Bild 2)

Eine zwischen Photomultiplier PMT und Pinhole PH angeordnete LED oder Hologenlampe beleuchtet über einen Kondensor KO das Pinhole PH rückseitig ebenfalls dreifarbig oder im IR. Die Pinholeöffnung wird über mindestens einen zusätzlichen Spiegel SP1(hier zwei Spiegel SP1 und SP2)über einen im Laserscanmikroskop angeordneten optischen Arm (Optik PO1 und VO) auf die CCD abgebildet. Der oder die im Strahlengang des Laserscanmikroskopes angeordnete Zusatzspiegel sind für den Laserscanvorgang ausschwenkbar und für den Markierungsvorgang präzise einschwenkbar ausgebildet. Beim Laserscanvorgang wird die LED abgeschaltet und aus dem Strahlengang ausgeschwenkt. Der Photomultiplier braucht nicht ausgeschwenkt zu werden. Für die Einstellung der Pinholelage nach Bild 1, 2 ist statt der LED auch der Laser und die CCD einsetzbar, allerdings unter Belastung der Probe.

Der Vorteil der Anordnung besteht darin, dass die Fehler des dichroitischen Spiegels beim Markierungsvorgang erfasst werden.

Ausleuchtung des Detektorpinholes durch den Laser und einen Ringspiegel (Bild 3)

Die Ausleuchtung des Pinholes erfolgt vorderseitig durch den Laser und einen im Laserscanmikroskop im telezentrischen Strahlbereich, hier zwischen Objektiv O und Spiegel SP, angeordneten Ringspiegel RS, der in einem unbeschichteten Randbereich des dichroitischen Spiegels SP das Laserlicht in Richtung des Pinholes PH reflektiert. Der Photomultiplier wird beim Markierungsvorgang aus dem Strahlengang des Laserscanmikroskopes ausgeschwenkt. Der Ringspiegel RS braucht beim Laserscanvorgang nicht aus dem Strahlengang ausgeschwenkt zu werden, weil das Laserlicht durch einschwenkbare Filter (nicht dargestellt) abgeblockt wird und nicht auf den Photomultiplier gelangen kann.

Auch bei dieser Anordnung werden die Fehler des dichroitischen Spiegels beim Markierungsvorgang mit erfaßt.

Lagemarkierung und Steuerung der Pinholeöffnung (Bild 4 und 5)

Ein PC oder μ-Controller wertet die CCD-Signale aus, ermittelt den optischen Schwerpunkt der Pinholeöffnung und speichert die xy-Koordinaten der zu markierenden Lage der Pinholeöffnung ab. Die Pixelgröße der CCD beträgt ca. $6\mu m$. Wegen der hier zehnfachen optischen Vergrößerung der CCD Kamera entschärft sich die Reproduzierbarkeitsforderung von $0,5\mu m$ auf $5\mu m$.

Auch die Größe der Pinholeöffnung kann nach diesem Verfahren ermittelt und gesteuert werden. Statt des Schwerpunktes der Pinholeöffnung wird die Lage der auf dem CCD-Chip abgebildeten Pinholekanten ausgewertet.

Die Pinholeöffnung ist hier schematisch als Kreis dargestellt. Ist sie quadratisch oder rechteckig, lässt sich die jeweilige Kantenlage auf der CCD leicht ermitteln.

Um eine markierte Lage der Pinholeöffnung wieder reproduzierbar auffinden zu können, wird das Laserscanmikroskop wie bei der Markierung der Pinholelage eingestellt (LED oder Spiegel eingeschwenkt, Photomultiplier eventuell ausgeschwenkt). Der μ-Controller steuert die beiden Schrittmotorantriebe $M_x$ und $M_y$ so, daß die aktuelle Lage der Pinholeöffnung auf dem CCD-Chip und der abgespeicherte virtuelle Zeiger dieselben Xy-Koordinaten aufweisen. Die Pinholetiffnung befindet sich nun mit einer Abweichung von höchstens $0,5\mu m$ über dem auf dem CCD-Chip markierten Punkt.

Die Größe der Pinholeöffnung lässt sich analog zu diesem Verfahren ebenfalls mit einer Reproduzierbarkeit von $0,5\mu m$ erfassen und einstellen.

Öffnung und Lage des Pinholes können mit der erfindungsgemäßen Anordnung und dem erfindungsgemäßen Verfahren beliebig oft und an jeder Stelle mit einer Reproduzierbarkeit von $0,5\mu m$ ermittelt und eingestellt werden. Die als Normal dienende CCD darf allerdings auch langzeitig keine Lageänderungen zum Strahlengang des Laserscanmikroskopes erfahren.

Ausführungsbeispiel LSM (Bild 6)

In Bild 6 ist ein Ausführungsbeispiel der erfindungsgemäßen Anordnung nach Bild 2 für ein ZEISS LSM 510 dargestellt. Die vier Pinholes werden rückseitig durch einschwenkbare und seriell einzuschaltende LED's und je einen Kondensor beleuchtet. Ein präzis einschwenkbarer Zusatzspiegel SP3 lenkt das vom Pinhole kommende Licht auf den CCD-Chip um, dessen Signale ausgewertet werden. Vorteilhaft ist, dass für die Markierung und die Einstellung aller vier Pinholes nur eine CCD-Kamera am Laserscanmikroskop benötigt wird und dass auch die vom dichroitischen Hauptspiegel verursachten Markierungsfehler erfasst werden.

In den Bildern 7, 8, 9 und 10 sind Lösungsvarianten zu einem weiteren vorteilhaften Einstellverfahren der Pinholelage dargestellt.

In Bild 7 wird ein axialer Lichtzeiger, der die gleiche Lage wie der Laserstrahl haben soll, durch zusätzliche optische Elemente erzeugt.

Das Pinhole wird mittels der Schrittmotoren so in seiner Lage gesteuert, dass der Photomultiplier ein maximales Lichtsignal detektiert. Dann trifft der Lichtzeiger genau auf die Pinholeöffnung. Die Pinholelage ist somit optimal für den Laserscanvorgang eingestellt.

Eine von der LED beleuchtete Lochblende LB wird in die Pinholeebene abgebildet. Das Bild der Lochblende dient als optischer Zeiger, der mittels Pinhole, Photomultiplier und Schrittmotorantrieben eingefangen wird.

Die erstmalige Kalibrierung der Pinholelagen und Speicherung der x- und y-Koordinaten erfolgt durch Suchalgorithmen mit dem Laser. Die Lochblende wird so justiert dass der LED Fokus mit dem Laserfokus übereinstimmt. Nach der Kalibrierung erfolgt beim Messen mit dem LSM die Einstellung der Pinholelagen anhand der abgespeicherten Pinholelagen. Eine sich anschließende Feinkorrektur erfolgt nach dem LED Fokus, wobei vorteilhaft die Probe nicht mit dem Licht belastet wird, weil der Laser abgeschaltet wird.

In Bild 8 wird durch zusätzliche Elemente ein zum Laserstrahl schräger Lichtzeiger erzeugt, der auf ein zusätzliches Referenzpinhole RPH trifft.

Die Schräglage wird bei der erstmaligen Kalibrierung des LSM eingestellt, indem das Pinhole durch Suchalgorithmen auf den Laserfokus eingestellt wird und anschließend die Lochblende so justiert wird, dass der LED-Fokus durch das Referenzpinhole tritt und der dahinter befindliche Fotoempfänger PE maximale Intensität aufweist.

Nach der Kalibrierung erfolgt beim Messen mit dem LSM die Einstellung der Pinholelagen anhand der abgespeicherten Pinholelagen und Feinkorrekturen mit dem Laserfokus wie anhand Bild 7 beschrieben. Vorteilhaft kann für das Referenzpinhole eine LED mit 900nm Wellenlänge verwendet werden.

Weil bei dieser Wellenlänge der PMT unempfindlich ist, kann vor - oder auch während der Messungen mit dem LSM die Steuerung der Pinholelage mit der IR LED bei hoher Quanteneffizienz am Photoempfänger erfolgen.

Die Einstellung der Pinholelage erfolgt über das Referenzpinhole. Pinhole und Referenzpinhole sind mechanisch miteinander gekoppelt. Vorteilhaft wird statt des Photomultipliers ein separater Photoempfänger PE als Detektor verwendet.

Die Lochblende wird in die Ebene des Referenzpinholes abgebildet.

Der PMT und der Laser werden nicht für die Einstellung benötigt.

In Bild 9 wird durch die optische Abbildung eines Diaphragmas DP in die Pinholeebene ein aus 100x100=$10^4$ Lichtzeigern bestehender Flächenmaßstab im Pinholeeinstellbereich von 1x1mm erzeugt. Pinhole und Photomultiplier können mittels der hochauflösenden Schrittmotorantriebe jeden beliebigen Lichtzeiger mit hoher Reproduzierbarkeit einfangen und hiervon ausgehend beliebige Pinholelagen in einem Quadrat von 10x10$\mu$m einstellen. Das Diaphragma ist eine matrixförmig von Löchern (5$\mu$m Durchmesser, 10$\mu$m Abstand) durchsetzte Chrommaske oder ein Kreuzgitter von 1x1mm Größe.

Die Lage der Diaphragmafoki in der Pinholeebene wird bei der erstmaligen Kalibrierung des LSM durch Suchalgorithmen bestimmt, indem das Diaphragma so justiert wird, dass sowohl der Laserfokus als auch ein Foki des Diaphragmas (z.B. der mittlere) durch das Pinhole treten (Koordinatenursprung). Alle weiteren Pinholelagen werden bezogen auf diesen Koordinatenursprung und die anderen optischen Pixel der Pokimatrix ermittelt und abgespeichert.

Beim Messen mit dem LSM erfolgt die Einstellung der Pinholelage durch Einstellung auf den abgespeicherten Diaphragmafokus und motorischer Interpolation zwischen den Foki. Der Laser ist hierbei vorteilhaft abgeschaltet.

Anstelle des Diaphragmas in Bild 9 kann auch ein Mikrolinsenarray verwendet werden. Üblich sind Mikrolinsen von 50$\mu$m Durchmesser Ein Array von 5x5mm Größe würde dann ebenfalls 100x100=$10^4$ Lichtzeiger erzeugen, die aber um den Maßstab 1:10 optisch verkleinert in die Pinholeebene abgebildet werden müssen.

In Bild 10 entsteht in der Pinholeebene das Beugungsbild eines aus Mikrolinsen bestehenden Quadrupolelementes QP, das ebenfalls eine Matrix optischer Zeiger darstellt. Eine Wabenpupille PW verhindert störende Fresnelbeugung.

Prinzip:    Das Quadrupolelement besteht aus 4 Mikrolinsen, in deren Brennpunkten zur Vermeidung der Fresnelbeugung sich die Wabenpupille befindet. Das Beugungsbild des Quadrupolelementes in der Pinholebene ist eine Matrix optischer Zeiger, die als Flächenmaßstab dient. Das Pinhole kann mittels der hochauflösenden Schrittmotorantriebe und des Photomultiplier auf jeden beliebigen optischen Zeiger reproduzierbar eingestellt werden.

Mit den Parametern

| f = 150 mm | Brennweite der Abbildungslinse L |
| d = 10 mm | Abstand der Mikrolinsen des Quadrupol-elementes |
| $\lambda$ = 630 nm | rote Laserdiode |

und der Beugungsgleichung

$$g = \lambda \cdot f / d$$

ergibt sich ein Abstand der matrixförmigen Lichtzeiger in der Pinholeebene von

$$g = 9,5 \, \mu m.$$

Pinhole und Photomultiplier können mittels der hochauflösenden Schrittmotorantriebe jeden beliebigen Lichtzeiger mit hoher Reproduzierbarkeit einfangen und hiervon ausgehend beliebige Pinholelagen in einem Quadrat von 9,5x9,5$\mu$m einstellen.

Ein weiteres besonders einfaches Verfahren zur Pinholejustierung soll hinzugefügt werden. Der Vorschlag besteht darin, in den parallelen Strahlengang des Laserscanmikroskopes eine Retrofolie (Bild 11) oder ein Tripelprisma (Bild 12) in und aus dem Strahlengang schiebbar anzuordnen. Durch das in den Strahlengang geschobene optische Element wird der Laserfokus in die Pinholeebene abgebildet und zusätzlich verhindert, dass die Probe beim Justieren durch Laserlicht belastet und ausgeblichen wird. Durch das aus dem Strahlengang geschobene optische Element wird die Probe für die Beobachtung frei geschaltet. An den Schiebemechanismus werden auf Grund der Winkelinvarianz von Retrofolie oder Tripelprisma keine besonderen Anforderungen gestellt. Die nur minimal geöffnete Pinholeöffnung kann nun so justiert werden, bis das Laserlicht genau hindurch tritt und vom Photoempfänger maximal empfangen wird. Der Photoempfänger wird wegen der nur minimal geöffneten Pinholeöffnung nicht geblendet. Eine motorische Voreinstellung der Pinholeöffnung in die Nähe des Laserfokus (max. 2$\mu$m Ablage), deren Werte in einen einmaligen Justiervorgang zu finden sind, erleichtert die automatische Suche nach dem Fokus durch kleine Scanbewegungen der xy-Antriebe des Pinholesystems in einem Gebiet von etwa 5$\mu$mx5$\mu$m.

## 1. Vorteile

- Die Pinholeöffnung kann nach diesem Verfahren besser als 0, 3$\mu$m zum Laserfokus ausgerichtet werden.
- Die Pinholejustierung kann auch während einer Probenuntersuchung vorgenommen werden, weil die Probe durch die eingeschobenen optischen Elemente (Retrofolie oder Tripelprisma) keine Laserbelastung erfährt und nicht verbleichen kann.

- Die kleinen Pinholeöffnungen von z. B. 3$\mu$m Größe können auch ohne Wegmeßsysteme auf 0,3$\mu$m genau justiert werden.

## 2. Hinweise

- Um die volle Intensität des Laserlichtes für diese Justierung am Pinhole zur Verfügung zu haben, sollten sich möglichst keine Farbfilter im Strahlengang befinden.
- In einem weiteren Erfindungsvorschlag wird beschrieben, wie Winkelfehler des Laserstrahles beim Schalten der Teilerspiegel und Farbfilter vermieden werden können ( 3 Punktanlage der Spiegel).
- Dieses Verfahren ähnelt dem Ringspiegelverfahren nach Bild 3, bei dem jedoch die Probe durch Laserlicht beim Justieren belastet wird und das eine genaue Ausrichtung des Ringspiegels senkrecht zur optischen Achse voraussetzt.

## Patentansprüche

1. Vorrichtung zur Einstellung der Lage und/oder Größe eines Pinholes in einem Laser Scanning Mikroskop(LSM),
wobei über den LSM - Laser eine Beleuchtung des Pinholes erfolgt und eine Verschiebung des Pinholes quer zur optischen Achse erfolgt, bis ein Intensitätsmaximum auf einem Empfänger vorliegt,
wobei mittels eines Reflektors in einem parallelen Strahlengang ein Beleuchtungsfokus in der Pinholeebene erzeugt wird.

2. Vorrichtung nach Anspruch 1,
wobei ein Ringspiegel vorgesehen ist der einen Teil des Beleuchtungslichtes in Richtung des Pinholes reflektiert.

3. Vorrichtung nach einem der vorangehenden Ansprüche,
wobei zur Fokussierung des Lasers in die Pinholeebene eine Retrofolie oder ein Tripelprisma in den Strahlengang einschiebbar oder einschwenkbar sind.

4. Vorrichtung nach Anspruch 1, wobei eine Erfassung der Pinholelage über einen Empfänger erfolgt und diese gemeinsam mit zu auswechselbaren optischen Komponenten gehörigen Daten abgespeichert wird.

5. Vorrichtung nach einem der vorangehenden Ansprüche, wobei der Empfänger ortsauflösend ist.

6. Vorrichtung nach einem der vorangehenden Ansprüche,
   wobei der Beleuchtungsschwerpunkt der durch das Pinhole gehenden Strahlung erfasst wird.

7. Vorrichtung nach einem der Ansprüche 5 oder 6, wobei die Pinholeöffnung optisch vergrößert auf den ortsauflösenden Empfänger abgebildet wird.

8. Verfahren zum Betrieb eines Laser-Scanning-Mikroskopes nach mindestens einem der vorangehenden Ansprüche.

**Bild 1:** Laserscanmikroskop mit CCD und LED zur Lagemarkierung und reproduzierbaren Einstellung der Pinholeöffnung (vorderseitige Ausleuchtung des Pinholes)

CCD
1600x1600 Pixel

PMT

← LED (RGB)

KO

VO

xy-Schrittmotorantriebe
für Pinholelage

PH

Nebenfarbteiler

PO

PO1

Spiegel SP

L

SP1

SP2

O

P

**Bild 2:** Laserscanmikroskop mit CCD und LED zur Lagemarkierung und reproduzierbaren Einstellung
der Pinholeöffnung (rückseitige Ausleuchtung des Pinholes)

**Bild 3:** Laserscanmikroskop mit CCD und Ringspiegel zur Lagemarkierung und reproduzierbaren Einstellung der Pinholeöffnung

x,y: zu speichernder virtueller Zeiger

**Bild 4:** Lageermittlung der Pinholeöffnung

**Bild 5:** Lagesteuerung der Pinholeöffnung

**Bild 6:** Ausführungsbeispiel der Erfindung mit rückseitiger Ausleuchtung von 4 Pinholes durch je eine LED und je einen Kondensor und eine CCD-Auswertekamera für das LSM 510 gemäß Bild 2

PMT

xy-Schrittmotorantriebe
für die Pinholelage

PH

Nebenfarbteiler

PO

L

LB    KO

LED (RGB)

SP

Kollimator

O

P

**Bild 7:** Laserscanmikroskop mit axialem Lichtzeiger zur reproduzierbaren Einstellung der Pinholelage

**Bild 8:** Laserscanmikroskop mit Referenzpinhole und schrägem Lichtzeiger zur reproduzierbaren Einstellung der Pinholelage

PMT

xy-Schrittmotorantriebe
für die Pinholelage

PH und Bild des Diaphragmas DP

Nebenfarbteiler

PO

DP    KO

L

SP

LED (RGB)

O

P

**Bild 9:**    Laserscanmikroskop mit Diaphragma zur reproduzierbaren Einstellung der
Pinholelage

PMT

xy-Schrittmotorantriebe
für die Pinholelage

PH und Beugungsbild des Quadrupolelementes QP

PO

Pupillenwaben

L

Laserdiode (RGB)

SP

O

PW    QP

P

**Bild 10:**    Laserscanmikroskop mit Qudrupolelement zur reproduzierbaren Einstellung der
Pinholelage (nur 2 Strahlengänge gezeichnet)

Photomultiplier

xy-Schrittmotorantriebe
für die Pinholelage

Pinhole

Nebenfarbteiler

Laser

dichroitischer
Spiegel

Retrofolie

Probe

**Bild 11:** Laserscanmikroskop mit in den Strahlengang einschiebbarer Retrofolie zur Justierung des Pinholes in die Taille des Laserfokus

Photomultiplier

META-Detektor

Emissionsfilter

Photomultiplier

y x Pinhole

dichroitischer Nebenspiegel

Pinhole

y x

Pinhole

y x

Lichtaus-kopplung

y x

dichroitische Nebenspiegel

Lichtein-kopplung

Dichroitischer Hauptspiegel

Tripelprisma

Scanoptik    xy-Scanner    Monitordiode

Probe

**Bild 12:**     Laserscanmikroskop mit in den Strahlengang einschiebbarem Tripelprisma zur Justierung der Pinholes in die Taille der Laserfokusse

**Europäisches Patentamt**
**European Patent Office**
**Office européen des brevets**

## EUROPÄISCHER TEILRECHERCHENBERICHT

der nach Regel 63 des Europäischen Patentübereinkommens für das weitere Verfahren als
europäischer Recherchenbericht gilt

**Nummer der Anmeldung**

EP 09 00 8144

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| A | US 5 084 612 A (IWASAKI ET AL) 28. Januar 1992 (1992-01-28) * Spalte 5, Zeile 66 - Spalte 6, Zeile 45 * * Spalte 8, Zeile 37 - Zeile 55 * * Abbildung 1 * * Spalte 8, Zeile 50 - Spalte 9, Zeile 14 * ----- | 1,3,8 | INV. G02B5/00 G02B21/00 |
| A | US 6 563 632 B1 (SCHOEPPE GUENTER ET AL) 13. Mai 2003 (2003-05-13) * Spalte 4, Zeile 41 - Zeile 67 * * Anspruch 3 * * Abbildungen 1,2,5 * ----- | 1,3,8 | |
| A | PATENT ABSTRACTS OF JAPAN Bd. 2003, Nr. 1, 14. Januar 2003 (2003-01-14) -& JP 2002 277746 A (OLYMPUS OPTICAL CO LTD), 25. September 2002 (2002-09-25) * Zusammenfassung * * Absatz [0009] - Absatz [0015] * * Absatz [0027] - Absatz [0030] * ----- -/-- | 1,3,8 | |

|  |  |
|---|---|
| | **RECHERCHIERTE SACHGEBIETE (IPC)** |
| | G02B |

### UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 30. Juli 2009 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04E09)

Europäisches
Patentamt

European
Patent Office

Office européen
des brevets

**EUROPÄISCHER
TEILRECHERCHENBERICHT**

**Nummer der Anmeldung**

EP 09 00 8144

| | EINSCHLÄGIGE DOKUMENTE | | KLASSIFIKATION DER ANMELDUNG (IPC) |
|---|---|---|---|
| Kategorie | Kennzeichnung des Dokuments mit Angabe, soweit erforderlich der maßgeblichen Teile | Betrifft Anspruch | |
| A | WO 2004/104647 A (CARL ZEISS JENA GMBH; LASSER, THEO; LOPEZ, ANTONIO; SIDLER, THOMAS; FA) 2. Dezember 2004 (2004-12-02) * Ansprüche 9,10; Abbildung 3 * ----- | 1,3,8 | |
| A | US 6 185 035 B1 (OTSUKI SHINYA ET AL) 6. Februar 2001 (2001-02-06) * Spalte 1, Zeile 11 - Zeile 34 * * Abbildung 1 * ----- | 1,3,8 | |

**RECHERCHIERTE SACHGEBIETE (IPC)**

EPO FORM 1503 03.82 (P04C12)

Europäisches
Patentamt

European
Patent Office

Office européen
des brevets

**UNVOLLSTÄNDIGE RECHERCHE
ERGÄNZUNGSBLATT C**

Nummer der Anmeldung

EP 09 00 8144

Vollständig recherchierbare Ansprüche:
         3

Unvollständig recherchierte Ansprüche:
         1, 8

Nicht recherchierte Ansprüche:
         2, 4-7

Grund für die Beschränkung der Recherche (nicht patentfähige
Erfindung(en)):

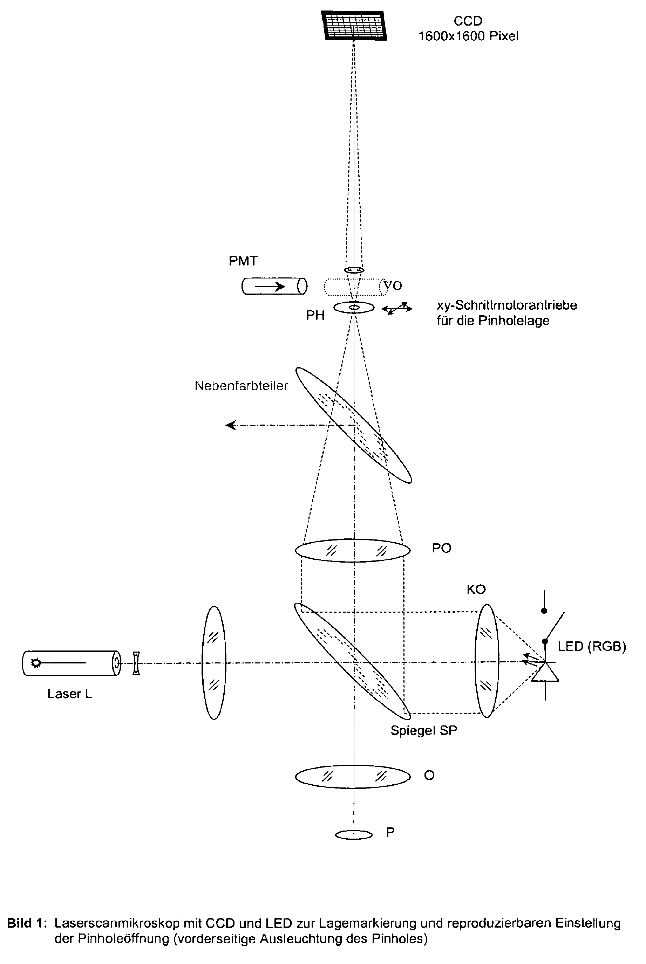

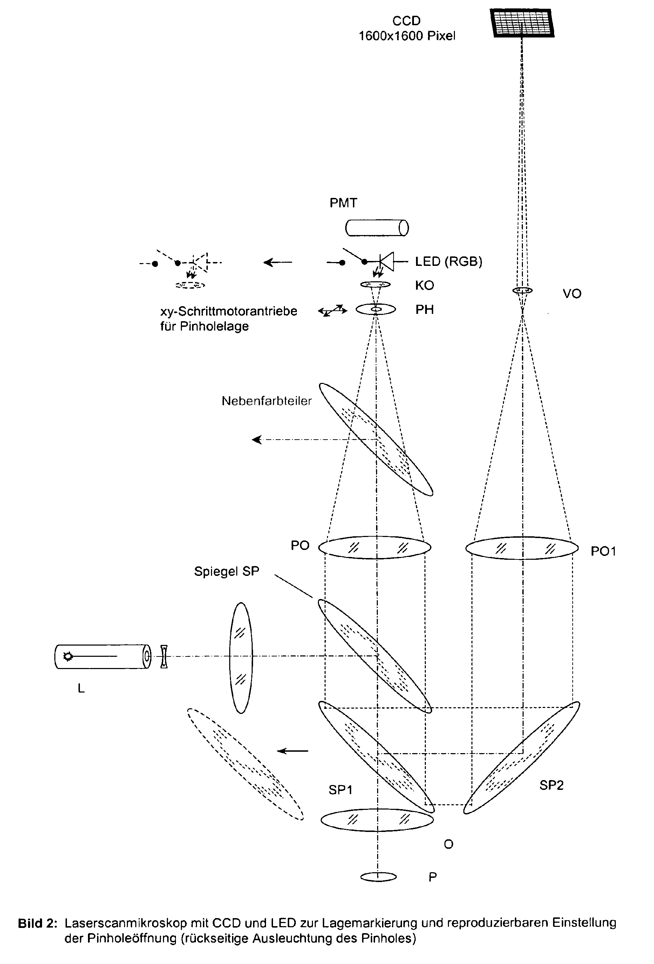

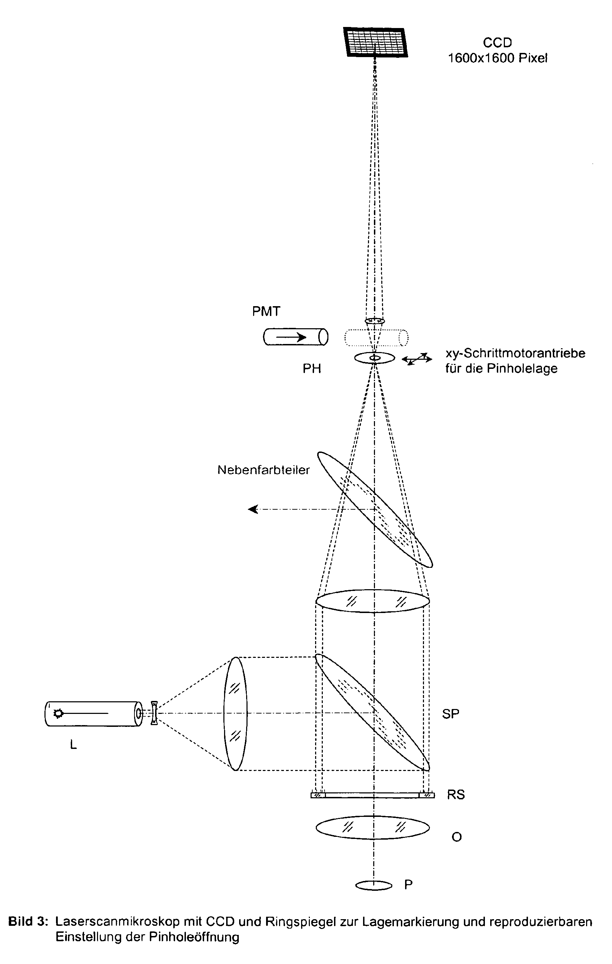

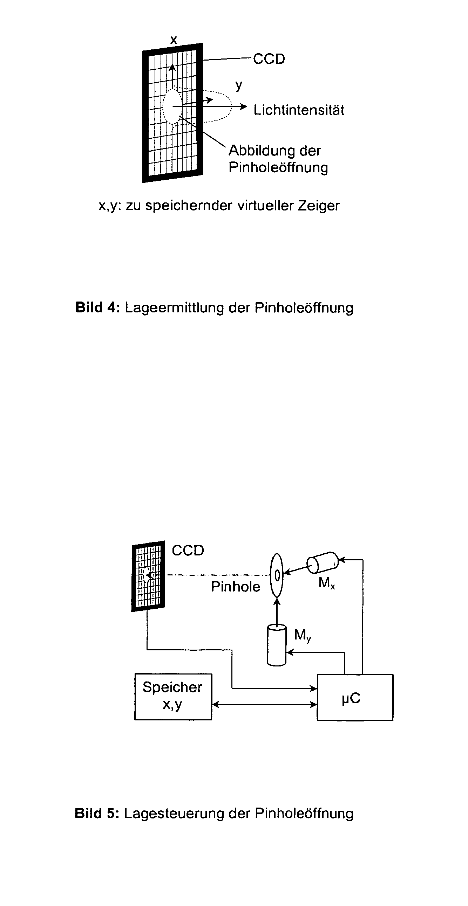

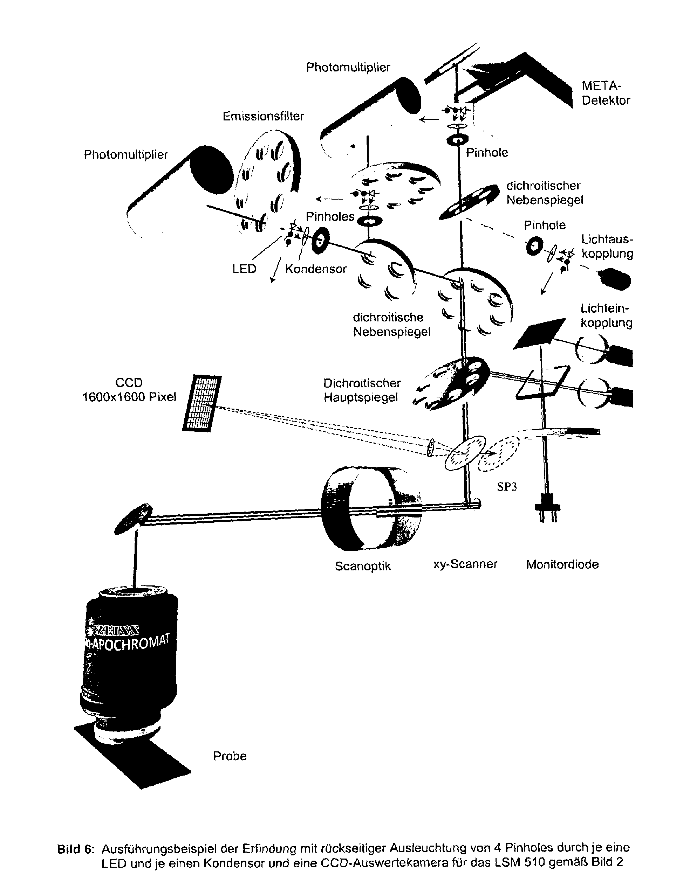

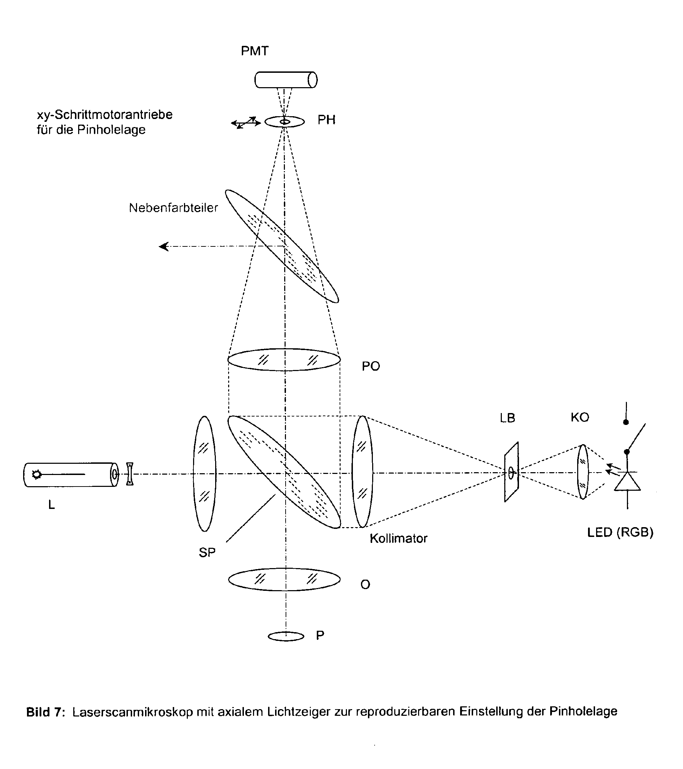

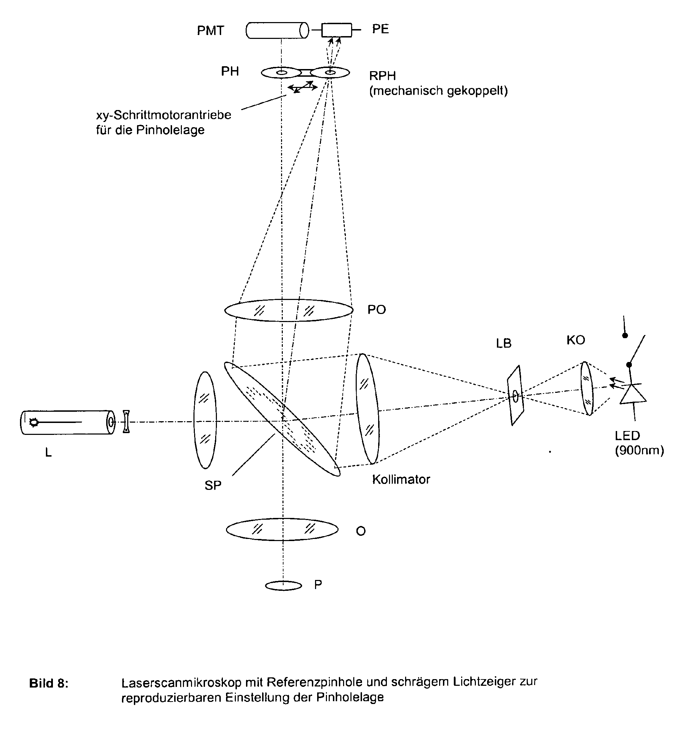

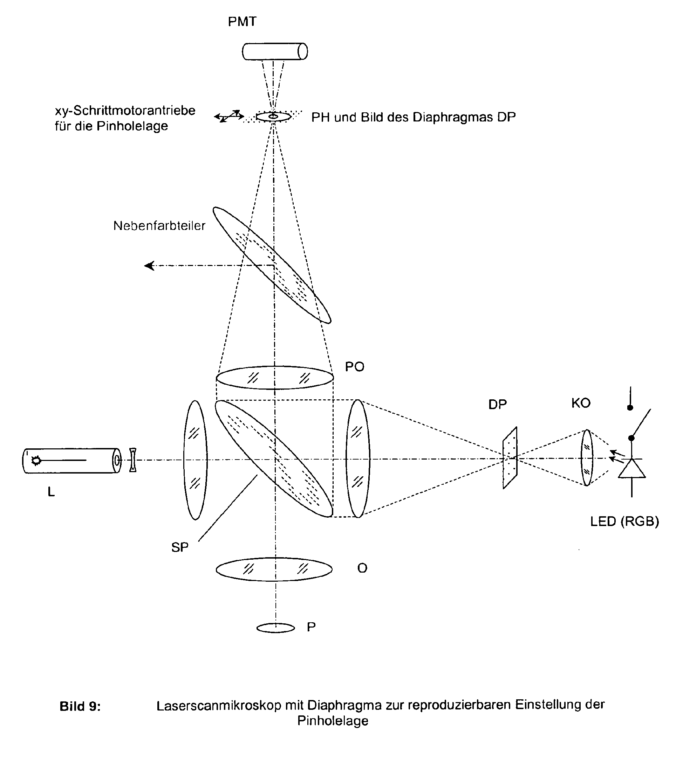

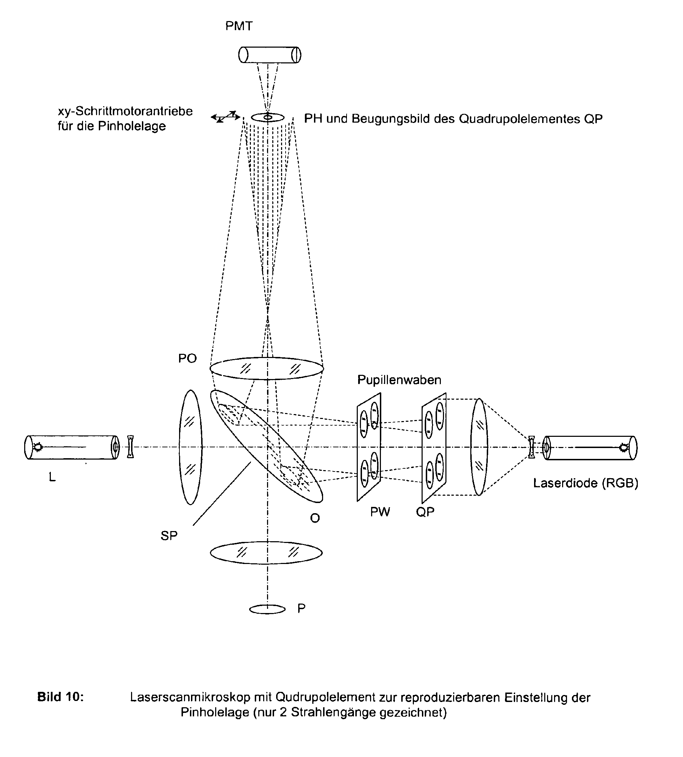

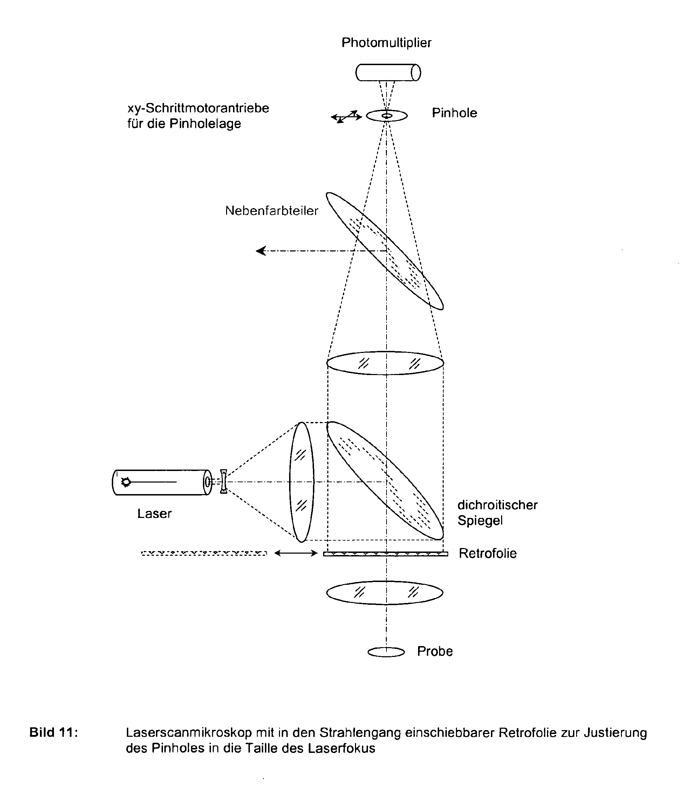

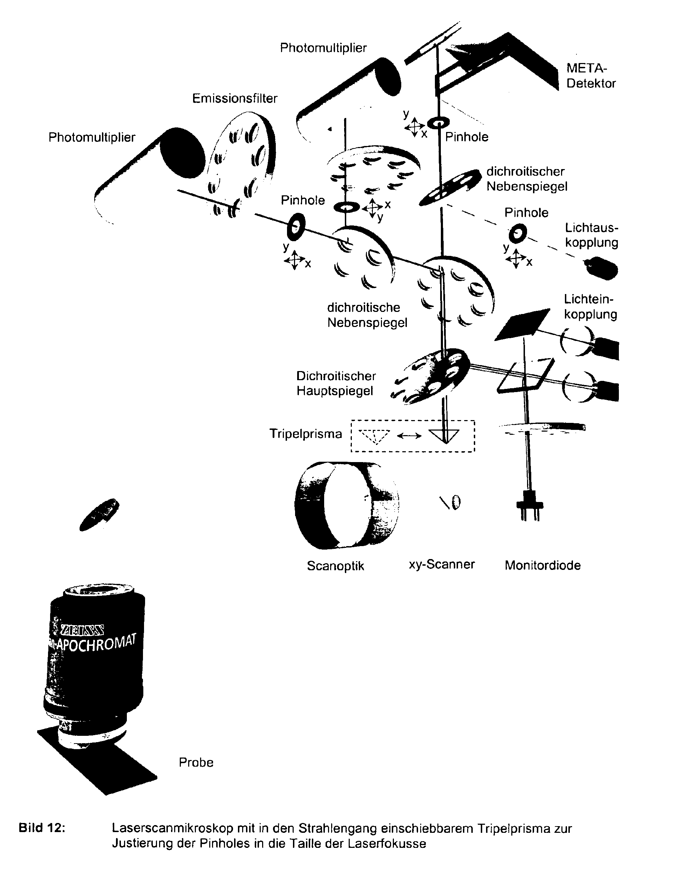

Der eingereichte Anspruchsatz der Teilanmeldung genügt den Erfordernissen
des Artikels 76(1) EPÜ nicht, da deren Gehalt über den der ursprünglich
eingereichten Fassung hinausgeht. Die Gründe dafür sind die folgenden.
Das Merkmal des Reflektors der in einem parallelen Strahlengang des Laser
Scanning Mikroskops angebracht ist, ist den ursprünglich eingereichten
Unterlagen jedoch nicht direkt und auch nicht unmittelbar zu entnehmen,
da das generalisierte Merkmal des Reflektors in einem parallelen
Strahlengang nicht offenbart ist. Die eingereichten Unterlagen offenbaren
in Abbildungen 11, 12 und auf Seite 8, letzter Absatz zwei spezifische
Alternativen (Retrofolie, Tripelprisma), die anscheinend die Eigenschaft
besitzen einfallende Strahlung in die Einfallsrichtung zurückzusenden,
geben jedoch dem Fachmann keinen Hinweis, dass das technische Problem mit
jeder beliebigen, in Anspruch 1 genannten Art von Reflektor gelöst werden
könnte.

In der Gesamtschau der Anmeldeunterlagen und in Anbetracht des vagen
Wortlauts von Anspruch 1 bleibt zudem fraglich, ob der Gegenstand der
Ansprüche auf eine Verstellvorrichtung per se gerichtet ist, die jedoch
als solche nicht weiter spezifiziert ist oder auf ein konfokales
Laser-Scanning-Mikroskop mit Pinhole und besagter Verstellvorrichtung
gerichtet ist. Da der beanspruchte Gegenstand in der beanspruchten Breite
den ursprünglich eingereichten Unterlagen jedoch nicht direkt und auch
nicht unmittelbar zu entnehmen ist, wurden die Beschreibung Seite 8 und
in Figuren 11, 12 diskutierte Ausführungsform recherchiert, die
Spezialfälle des beanspruchten Gegenstands darstellen.

Die in Anspruch 2 angegebene Kombiantion von Reflektor in einem
parallelen Strahlengang und einem zusätzlichen Ringspiegel wird von den
ursprünglich eingereichten Unterlagen jedoch nicht erwähnt. Ein konkretes
Ausführungsbeispiel, das eine Retrofolie oder Tripelprisma in Verbindung
mit einem Ringspiegel zeigt, ist den ursprünglich eingereichten
Unterlagen jedoch auch nicht zu entnehmen, so dass auch keine konkrete
Ausführungsform dieser Merkmalskombination recherchiert werden konnte.
Die Verwendung einer Retrofolie oder eines Tripelprisma wird auf Seite 9,
letzter Absatz der Beschreibung als Alternative zu dem
Ringspiegelverfahren präsentiert, da jedoch im Gegensatz zu den in der
Beschreibung Seite 8 und in Figuren 11, 12 diskutierten Ausführungsformen
eine genaue Ausrichtung des Ringspiegels voraussetzt.
Die in den abhängigen Ansprüchen 4 - 7 angegebenen Merkmalskombinationen
geben Anlass zu einem ähnlichen Einwand unter Artikels 76(1) EPÜ, da
weder die Abspeicherung von Daten optischer Komponenenten (Anspruch 4),
noch die ortsauflösenden Eigenschaften des Empfängers (Ansprüche 5 & 7),

Europäisches
Patentamt

European
Patent Office

Office européen
des brevets

**UNVOLLSTÄNDIGE RECHERCHE
ERGÄNZUNGSBLATT C**

**Nummer der Anmeldung**

EP 09 00 8144

noch die Erfassung des Beleuchtungsschwerpunktes (Anspruch 6), die einen ortsauflösenden Empfänger voraussetzt in Verbindung mit der Retrofolie oder dem Tripelprisma in den ursprünglich eingereichte Unterlagen diskutiert werden. In den Ausführungsbeispielen (Abbildungen 11, 12) bei denen eine Retrofolie oder ein Tripelprisma in den kollimierten Teil des Strahlengangs gebracht werden, sind ausschließlich Photomultiplier als Empfänger offenbart, die in aller Regel jedoch keine ortsauflösenden Eigenschaften besitzen. Die in Ansprüchen 4 - 7 angegebenen Merkmalskombinationen sind für den Fachmann daher nicht einmal mittelbar aus den ursprünglich eingereichte Unterlagen abzuleiten.

**ANHANG ZUM EUROPÄISCHEN RECHERCHENBERICHT
ÜBER DIE EUROPÄISCHE PATENTANMELDUNG NR.**

EP 09 00 8144

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 5084612 | A | 28-01-1992 | KEINE | | |
| US 6563632 | B1 | 13-05-2003 | US | 6167173 A | 26-12-2000 |
| | | | US | 6486458 B1 | 26-11-2002 |
| JP 2002277746 | A | 25-09-2002 | KEINE | | |
| WO 2004104647 | A | 02-12-2004 | AT | 357676 T | 15-04-2007 |
| | | | DE | 10323922 A1 | 16-12-2004 |
| | | | EP | 1625427 A1 | 15-02-2006 |
| | | | JP | 2007500872 T | 18-01-2007 |
| | | | US | 2007285813 A1 | 13-12-2007 |
| US 6185035 | B1 | 06-02-2001 | JP | 11271622 A | 08-10-1999 |

EPO FORM P0461

Für nähere Einzelheiten zu diesem Anhang : siehe Amtsblatt des Europäischen Patentamts, Nr.12/82